# EUROPÄISCHE PATENTSCHRIFT

(11) **EP 3 727 951 B1**
(45) Veröffentlichungstag und Bekanntmachung des Hinweises auf die Patenterteilung: **19.08.2026**
(21) Anmeldenummer: 18779280.9
(22) Anmeldetag: 18.09.2018
(51) Int. Cl.: B60R 21/013, B60R 21/0132, B60R 21/0134

(54) **VERFAHREN ZUR ANSTEUERUNG WENIGSTENS EINER KOMPONENTE EINER INSASSENRÜCKHALTEVORRICHTUNG FÜR EIN KRAFTFAHRZEUG**
METHOD FOR ACTUATING AT LEAST ONE COMPONENT OF A VEHICLE OCCUPANT RESTRAINT DEVICE FOR A MOTOR VEHICLE
PROCÉDÉ DE COMMANDE D'AU MOINS UN COMPOSANT D'UN DISPOSITIF DE RETENUE D'OCCUPANT POUR UN VÉHICULE À MOTEUR

(30) Priorität: 19.12.2017 DE 102017223270
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: HONS, Christian, 38108 Braunschweig (DE); SCHMIDT, Jana, 30169 Hannover (DE); LESCHKE, Andre, 38448 Wolfsburg (DE); RYL, Axel, 31303 Burgdorf (DE)
(86) Internationale Anmeldenummer: PCT/EP2018/075201
(87) Internationale Veröffentlichungsnummer: WO 2019/120651

(56) Entgegenhaltungen:
- WO-A1-02/062630
- DE-A1- 102011 102 088
- DE-A1- 102013 214 171
- DE-A1- 19 956 530
- US-A1- 2001 040 065
- US-A1- 2002 024 211

## Beschreibung

Die Erfindung betrifft ein Verfahren zur Ansteuerung wenigstens einer Komponente einer Insassenrückhaltevorrichtung für ein Kraftfahrzeug mit den Merkmalen vom Oberbegriff des Patentanspruchs 1. Die Erfindung betrifft ferner eine Insassenrückhaltevorrichtung zur Durchführung des Verfahrens und ein Kraftfahrzeug mit wenigstens einer solchen Insassenrückhaltevorrichtung.

In Kraftfahrzeugen werden Insassenrückhaltvorrichtungen bestehend aus Airbag und Sicherheitsgurt eingesetzt, um einen Insassen im Crashfall an die Verzögerung des Fahrzeugs anzukoppeln und ein Aufschlagen von Körperteilen (beispielsweise des Kopfes) an Bauteilen des Innenraums zu vermeiden. Nach einem Erkennen eines Aufpralls (im Allgemeinen über die Messung der Verzögerung des Fahrzeugs mittels einer Beschleunigungssensorik) wird eine Straffung und Verriegelung des Sicherheitsgurtes und ein dem Lastfall zugeordneter Airbag ausgelöst. Derartige Insassenrückhaltevorrichtungen sind üblicherweise mit pyrotechnischen Aktoren ausgestattet, um in wenigen Millisekunden eine Straffung des Sicherheitsgurtes herbeiführen und den Airbag aufblasen zu können.

Ein Verfahren mit den Merkmalen vom Oberbegriff des Patentanspruchs 1 ist beispielsweise aus der DE 10 2015 201 721 A1 bekannt geworden. Konkret weist die offenbarte Insassenrückhaltevorrichtung einen als Dreipunktgurt ausgebildeten Sicherheitsgurt auf, welcher über zwei Umlenkelemente mit einer Gurtaufrolleinrichtung bewegungsmäßig verbunden ist. Jedes Umlenkelement ist gegenüber einer fahrzeugfesten Struktur verschiebbar gelagert und jeweils mit einer Antriebseinrichtung versehen, welche das jeweilige Umlenkelement verschieben kann. Die Umlenkelemente sind über eine Steuereinrichtung ansteuerbar, wobei die Steuereinrichtung mit Kollisionssensoren verbunden ist. Jedes der Umlenkelemente stellt eine Gurtstraffeinrichtung dar, wobei durch ein vertikales Verschieben der Umlenkelemente jeweils eine Gurtstraffung bewerkstelligt werden kann.

Wird eine erfolgte oder eine bevorstehende Kollision durch die Kollisionssensoren erfasst, so wird ein Auslösesignal erzeugt und der Sicherheitsgurt mittels einer ersten Gurtstraffeinrichtung gestrafft. Nach Ablauf eines vorgegebenen Zeitintervalls nach Aktivierung der ersten Gurtstraffeinrichtung wird durch die zweite Gurtstraffeinrichtung ein nochmaliges Straffen des Sicherheitsgurts bewirkt. Durch das geschilderte Verfahren soll eine sehr wirksame Straffung des Sicherheitsgurtes auch bei auf eine erste Kollision folgenden Kollision (Sekundärkollision) möglich sein.

In der DE 10 2016 206 533 A1 wird eine Insassenrückhaltevorrichtung beschrieben, welche ebenfalls einen Dreipunktgurt aufweist. Der Dreipunktgurt kann durch eine motorgetriebene Gurtaufrolleinrichtung gestrafft werden. Der Motor der Gurtaufrolleinrichtung wird über eine Steuereinheit angesteuert, welche mit einem Precrash-Sensor signaltechnisch verbunden ist. Die Steuereinheit dient auch zur Ansteuerung eines Verlagerungsmechanismus einer Lendenbereich-Stützvorrichtung einer Sitzlehne.

Wenn durch den Precrash-Sensor eine Fahrzeugheckkollision vorhergesagt worden und eine vorderste Stelle der Lendenbereich-Stützvorrichtung nicht an ihrer unteren Grenzposition angeordnet ist, so wird zunächst die Gurtaufrollrichtung betätigt. Anschließend wird der Verlagerungsmechanismus für die Lendenbereich-Stützvorrichtung derart angesteuert, dass die vorderste Stelle der Lendenbereich-Stützvorrichtung auf die untere und zugleich vordere Grenzposition eingestellt wird. Hierdurch soll eine Kraft, die bei einer Heckkollision auf den Hals oder den Nacken eines sitzenden Insassen ausgeübt wird, zu einem möglichst frühen Zeitpunkt verringert werden.

Aus der WO 02/062630 A1 ist eine Sicherheitsgurtanordnung zur Verwendung in einem Kraftfahrzeug bekannt. Die Anordnung weist einen Sicherheitsgurt auf, bei dem ein Ende mit einem Gurtautomat verbunden ist, und einen Sensor, der ein Signal erzeugt, das repräsentativ ist für eine Abrolllänge des Sicherheitsgurtes. Ein Kraftbegrenzer ist mit dem Gurtautomat verbunden, um dem Sicherheitsgurt ein Ausrollen mit einer variierenden Kraftbegrenzung zu ermöglichen. Eine Steueranordnung verändert ein Kraftniveau, das an dem Kraftbegrenzer in Abhängigkeit von einer Abrolllänge des Sicherheitsgurtes aus dem Gurtautomat wirkt.

Aus der DE 199 56 530 A1 sind eine Insassenrückhaltevorrichtung und ein Verfahren zum Steuern der Insassenrückhaltevorrichtung bekannt. Das Verfahren arbeitet wir folgt: Wenn ein Energieabsorptionsmechanismus eines Fahrzeugs aktiviert ist, wird ein Ausfahr-Längenabschnitt des Sicherheitsgurts von einem Verlagerungssensor erfasst, und von einer Ausfahrgeschwindigkeits-Berechnungseinrichtung wird die Gurt-Ausfahrgeschwindigkeit ermittelt. Anhand der Information von einem Geschwindigkeitssensor berechnet eine Fahrbahn. Eine Insassenbeschleunigungs-Berechnungseinheit berechnet eine Beschleunigung eines Insassen in Bezug auf die Fahrbahn aus der berechneten Ausfahrgeschwindigkeit des Gurts und der berechneten Fahrzeuggeschwindigkeit. Auf den Insassen einwirkende Aufprallkräfte lassen sich in einfacher und hochgenauer Weise unabhängig von dem Gewicht des Insassen und unabhängig davon, ob das Fahrzeug mit einem Airbag ausgerüstet ist, reduzieren.

Aus der US 2001/0040065 A1 ist ein Rückhaltesystem für einen Fahrzeuginsassen bekannt. Ein rückwärtiger Kollisionssensor ist dazu eingerichtet, eine mögliche Kollision mit einer Rückseite des Fahrzeugs zu erkennen. Nach einer Detektion steuert eine Steuerung ein Gurtsystem derart an, dass ein Kopf des Fahrzeuginsassen in Richtung einer Nackenstütze zurückgehalten wird oder dass die Wirbelsäule des Fahrzeuginsassen geradegerichtet wird, um hierdurch den Nacken des Fahrzeuginsassen vor der bevorstehenden Kollision zu schützen.

Aus der US 2002/0024211 A1 ist ein motorisierter Gurtautomat bekannt. Der motorisierte Gurtautomat ist dazu eingerichtet, auf ein Signal zu reagieren, dass einen gefährlichen Zustand des Fahrzeugs anzeigt. Als Reaktion auf das Signal zieht der Gurtautomat ein Band des Sicherheitsgurtes vor einer Kollision ein, um hierdurch einen Fahrzeuginsassen auf dem Sitz zurückzuziehen. Der Gurtautomat wird jedes Mal aktiviert, wenn ein gefährlicher Zustand detektiert wird.

Ausgehend vom vorliegenden Stand der Technik liegt der vorliegenden Erfindung die Aufgabe zu Grunde, ein Verfahren zur Ansteuerung wenigstens einer Komponente einer Insassenrückhaltevorrichtung für ein Kraftfahrzeug bereitzustellen, bei dem im Falle eines drohenden oder auch erfolgenden Aufpralls ein Maximum an Sicherheit bei gleichzeitiger Reduzierung der Insassenbelastung erzielt werden kann.

Des Weiteren liegt der Erfindung die Aufgabe zu Grunde, eine geeignete Insassenrückhaltevorrichtung zur Durchführung des Verfahrens bereitzustellen.

Vorliegende Aufgaben werden durch ein Verfahren mit den Merkmalen vom Patentanspruch 1 und durch eine Insassenrückhaltevorrichtung mit den Merkmalen von Anspruch 12 gelöst.

Vorteilhafte Ausbildungen beziehungsweise Weiterbildungen der Erfindung sind den jeweils abhängigen Ansprüchen zu entnehmen.

Fahrzeuggeschwindigkeits-Detektoreinheit eine Fahrzeuggeschwindigkeit bezüglich der Fahrbahn. Eine Insassenbeschleunigungs-Berechnungseinheit berechnet eine Beschleunigung eines Insassen in Bezug auf die Fahrbahn aus der berechneten Ausfahrgeschwindigkeit des Gurts und der berechneten Fahrzeuggeschwindigkeit. Auf den Insassen einwirkende Aufprallkräfte lassen sich in einfacher und hochgenauer Weise unabhängig von dem Gewicht des Insassen und unabhängig davon, ob das Fahrzeug mit einem Airbag ausgerüstet ist, reduzieren.

Aus der US 2001/0040065 A1 ist ein Rückhaltesystem für einen Fahrzeuginsassen bekannt. Ein rückwärtiger Kollisionssensor ist dazu eingerichtet, eine mögliche Kollision mit einer Rückseite des Fahrzeugs zu erkennen. Nach einer Detektion steuert eine Steuerung ein Gurtsystem derart an, dass ein Kopf des Fahrzeuginsassen in Richtung einer Nackenstütze zurückgehalten wird oder dass die Wirbelsäule des Fahrzeuginsassen geradegerichtet wird, um hierdurch den Nacken des Fahrzeuginsassen vor der bevorstehenden Kollision zu schützen.

Aus der US 2002/0024211 A1 ist ein motorisierter Gurtautomat bekannt. Der motorisierte Gurtautomat ist dazu eingerichtet, auf ein Signal zu reagieren, dass einen gefährlichen Zustand des Fahrzeugs anzeigt. Als Reaktion auf das Signal zieht der Gurtautomat ein Band des Sicherheitsgurtes vor einer Kollision ein, um hierdurch einen Fahrzeuginsassen auf dem Sitz zurückzuziehen. Der Gurtautomat wird jedes Mal aktiviert, wenn ein gefährlicher Zustand detektiert wird.

Aus der DE 10 2013 214 171 A1 ist eine Vorrichtung zum Anpassen einer Gurtlose eines Sicherheitsgurtes eines Fahrzeugs bekannt. Die Vorrichtung umfasst einen steuerbaren Motor, eine mit dem Motor gekoppelte Gurtrollspule zum Aufrollen und/oder Abrollen eines Gurtbandes des Sicherheitsgurtes und ein Steuerelement, das ausgebildet ist, um der Gurtrollspule ein erstes Drehmoment einzuprägen, um das Gurtband aufzurollen, insbesondere mit einer ersten Geschwindigkeit aufzurollen, oder ein zweites Drehmoment einzuprägen, um das Gurtband abzurollen, insbesondere mit einer zweiten Geschwindigkeit abzurollen, wobei die zweite Geschwindigkeit geringer als die erste Geschwindigkeit ist und/oder wobei das zweite Drehmoment geringer als das erste Drehmoment ist.

Ausgehend vom vorliegenden Stand der Technik liegt der vorliegenden Erfindung die Aufgabe zu Grunde, ein Verfahren zur Ansteuerung wenigstens einer Komponente einer Insassenrückhaltevorrichtung für ein Kraftfahrzeug bereitzustellen, bei dem im Falle eines drohenden oder auch erfolgenden Aufpralls ein Maximum an Sicherheit bei gleichzeitiger Reduzierung der Insassenbelastung erzielt werden kann. Des Weiteren liegt der Erfindung die Aufgabe zu Grunde, eine geeignete Insassenrückhaltevorrichtung zur Durchführung des Verfahrens bereitzustellen.

Vorliegende Aufgaben werden durch ein Verfahren mit den Merkmalen vom Patentanspruch 1 und durch eine Insassenrückhaltevorrichtung mit den Merkmalen von Anspruch 9 gelöst.

Vorteilhafte Ausbildungen beziehungsweise Weiterbildungen der Erfindung sind den jeweils abhängigen Ansprüchen zu entnehmen.

Die Erfindung geht aus von einem Verfahren zur Ansteuerung wenigstens einer Komponente einer Insassenrückhaltevorrichtung für ein Kraftfahrzeug. Bei dem Verfahren wird zumindest bei einem als unvermeidbar erscheinenden Aufprall auf ein fahrzeugfremdes Objekt die wenigstens eine Komponente in einer Verfahrensphase derart angesteuert, dass durch die Insassenrückhaltevorrichtung ein Kraft auf den Insassen wirkt, welche entgegen einer zu erwartenden, aufprallbedingten Vorverlagerungsrichtung des Insassen gerichtet ist.

Bestandteil der Insassenrückhaltevorrichtung kann beispielsweise ein heutzutage üblicher Drei-Punkt-Sicherheitsgurt sein. Bei einem drohenden Aufprall wird der Sicherheitsgurt durch eine Gurtbewegungseinrichtung gestrafft und zieht den angeschnallten Fahrzeuginsassen fest an den Fahrzeugsitz. Dabei wird durch den Sicherheitsgurt auf den Insassen also eine Kraft ausgeübt, welche entgegen der zu erwartenden, aufprallbedingten Vorverlagerungsrichtung des Insassen gerichtet ist.

Da die Gurtbewegungseinrichtung zumeist pyrotechnisch, also irreversibel betrieben wird, wirken auf den Insassen innerhalb kürzester Zeit sehr hohe Kräfte, die nicht speziell an den Insassen angepasst werden können.

Die Erfindung schlägt daher vor, dass in der einen Verfahrensphase die wenigstens eine Komponente derart angesteuert wird, dass ein bestimmter Gradient und/oder ein bestimmtes Maximum der auf den Insassen wirkenden Kraft nicht überschritten wird. In dieser Phase erfolgt die Ansteuerung der wenigstens einen Komponente also kraftgesteuert. In einer anderen, nachfolgenden Verfahrensphase wird die wenigstens eine Komponente hingegen derart angesteuert, dass eine Vorverlagerung des Insassen über eine bestimmte oder bestimmbare Wegstrecke zugelassen wird. In der nachfolgenden Verfahrensphase erfolgt also eine weggesteuerte Ansteuerung der Komponente.

Auf diese Weise kann das Verfahren in zwei Wirkrichtungen unterteilt werden, die unabhängig vom Gewicht des Fahrzeuginsassen die durch die Insassenrückhaltevorrichtung auf den Insassen wirkende Kraft begrenzen können. Dies führt zu einer wesentlichen Verbesserung der Schutzwirkung für den Insassen.

Gemäß einer ersten Weiterbildung wird vorgeschlagen, dass die wenigstens eine Komponente ein Elektromotor einer Gurtbewegungseinrichtung ist, der in der einen Verfahrensphase derart angesteuert wird, dass ein Sicherheitsgurt des Insassen gestrafft und dabei ein bestimmter Gradient und/oder ein bestimmtes Maximum einer Stromaufnahme des Elektromotors nicht überschritten wird. In der besagten, anderen Verfahrensphase wird der Elektromotor in einer entgegengesetzten Richtung angesteuert. Dies erfolgt derart, dass eine Vorverlagerung des Insassen erfolgt, wobei eine Drehung des Elektromotors nur bis zu einem bestimmten Grenzwert einer Wegstrecke der Vorverlagerung des Insassen zugelassen wird.

Auf diese Weise ist eine deutliche Reduzierung der auf den Insassen wirkenden Kraft in beiden Verfahrensphasen des Verfahrens möglich. Dies kann durch die Messung der Stromaufnahme des Elektromotors einerseits und die Messungen der Drehung des Elektromotors auf technisch einfache Weise überwacht werden. Eine Überwachung ist beispielsweise durch eine Strommesseinheit einerseits und einen Drehwinkelsensor andrerseits denkbar, wobei diese Baueinheiten dem Elektromotor zugeordnet und/oder in diesem direkt verbaut sind.

Gemäß einer anderen Weiterbildung des Erfindungsgedankens wird als Grenzwert der Wegstrecke der Vorverlagerung höchst vorteilhaft ein für den Aufprall im Innenraum maximal verfügbare Vorverlagerungsweg festgelegt. Auf diese Weise ist eine maximale Reduzierung der aufprallbedingten Belastung für den Insassen bei maximalem Schutz möglich.

Eine weitere Verbesserung des Verfahrens kann dadurch herbeigeführt werden, dass der bestimmte Gradient und/oder das Maximum der Stromaufnahme und/oder der Grenzwert der Wegstrecke der Vorverlagerung auch in Abhängigkeit von einer zu erwartenden Schwere des Aufpralls festgelegt wird. Eine zu erwartende Schwere des Aufpralls kann beispielsweise durch die Relativgeschwindigkeit zum erfassten Aufprallobjekt, durch die abgeschätzte Masse des Aufprallobjektes und/oder auch durch eine vorliegende Überdeckung zum Aufprallobjekt gegeben sein. Diese Größen werden vorzugsweise mit einer geeigneten Umfeldsensorik erfasst, welche beispielsweise Kamerasysteme und Ultraschallsensoren aufweisen kann. Auf diese Weise ist eine feinere Abstimmung des Verfahrens auf den jeweiligen Lastfall möglich.

In einer anderen Ausgestaltung des Erfindungsgedankens wird vorgeschlagen, dass der bestimmte Gradient und/oder das Maximum der Stromaufnahme und/oder der Grenzwert der Wegstrecke der Vorverlagerung vom Insassen auch in Abhängigkeit von erfassten Daten des Insassen festgelegt werden. Solche Insassendaten können beispielsweise die Position des Insassen, dessen Gewicht, dessen Größe oder auch dessen Gurtanschnallstatus sein. Derartige Daten sind beispielsweise durch eine geeignete Insassenerkennung erfassbar, welche eine Innenraumkamera, eine Sitzbelegungserkennung, eine Gurtverriegelungserkennung und Gewichtssensoren umfassen kann.

Eine andere Weiterbildung des Verfahrens schlägt vor, dass die Vorverlagerung über ihre gesamte Wegstrecke kontrolliert erfolgt. Hierbei wird durch die Wegsteuerung auf Grund der gemessenen Verzögerungen des Fahrzeugs kontinuierlich die notwendige Vorverlagerung des Insassen gemessen und über den Elektromotor der Gurtbewegungseinrichtung der notwendige Vorverlagerungsweg für den Insassen zur Verfügung gestellt bzw. freigegeben. Dabei erfolgt die Vorverlagerung vorzugsweise reibungsgedämpft, beispielsweise über ein selbsthemmendes Getriebe. Dieses kann bspw. zwischen dem Elektromotor und einer Drehwelle der Gurtbewegungseinrichtung zwischengeschaltet sein. Hierdurch kann der Weg der Vorverlagerung genau dosiert und über die Drehung des Elektromotors freigegeben werden.

Die besagte eine Verfahrensphase kann auch als "Precrash-Phase" bezeichnet werden. Durch zeitliche Ausdehnung dieser Verfahrensphase können frühzeitig Gurtlose und eine bestehende Vorverlagerung des Insassen (sogenannte OOP = Out Of Position) zunächst reduziert werden. Es kann also über eine deutlich längere Wirkdauer als üblich mit wesentlich geringerem Leistungseinsatz eine Ankopplung des Insassen an das Fahrzeug erreicht werden, welche jedoch der Wirkung eines über einen sehr kurzen Zeitraum wirkenden, pyrotechnischen Gurtstraffers entspricht.

Auf Grund des Einsatzes von Elektromotoren als Antrieb für die Gurtbewegungseinrichtung und damit der reversiblen Ausprägung kann zudem eine Auslöseentscheidung für eine Straffung des Sicherheitsgurtes jederzeit zurückgenommen werden, ohne den Insassen aufgrund der wirkenden Kräfte übermäßig zu beeinträchtigen. Eine Zurücknahme der Auslöseentscheidung kann beispielsweise dann vorgenommen werden, wenn die Umfeldsensorik des Kraftfahrzeugs ein Ausbleiben eines Aufpralls detektiert.

Es hat sich in Versuchen gezeigt, dass die Zeitdauer der einen Verfahrensphase, also der Precrash-Phase vorzugsweise in etwa dem 4- bis 7-Fachen, besonders bevorzugt in etwa dem 6-Fachen der Zeitdauer der anderen Verfahrensphase, also der Incrash-Phase bemessen wird. Bei diesem Zeitverhältnis, welches sich im Millisekundenbereich abspielt, kann durch den geringeren Leistungseinsatz eine für den Insassen besonders schonende Straffung des Sicherheitsgurtes erfolgen.

Um eine höhere Leistung des Elektromotors der Gurtbewegungseinrichtung auch bei geringeren Strömen und Kabelquerschnitten zu ermöglichen, ist es sehr von Vorteil, wenn als elektrische Spannungsquelle zur Bewegung des Elektromotors eine Hochspannungsquelle benutzt wird. Insbesondere bei Elektrofahrzeugen kann beispielsweise eine Nutzung des Hochvolt-Bordnetzes, also eine Nutzung der Spannung der Traktionsbatterie erfolgen.

Zu einer zuverlässigen Durchführung des Verfahrens wird erfindungsgemäß dadurch beigetragen, indem das Verfahren in der einen Verfahrensphase (Precrash-Phase) auf Basis von Daten einer Umfeldsensorik arbeitet und in der anderen Verfahrensphase (Incrash-Phase) auf Basis von Daten einer Beschleunigungssensorik. Komponenten einer Umfeld- und Beschleunigungssensorik sind seit langem erprobt und bewährt und können daher zur Zuverlässigkeit des Verfahrens beitragen.

Allerdings ist es zur Maximierung der Sicherheit durchaus vorteilhaft, dass eine gewisse Redundanz des Systems vorgehalten wird. Dies erfolgt erfindungsgemäß dadurch, dass bei einem Erkennen eines erfolgten Aufpralls durch die Daten der Beschleunigungssensorik, welcher nicht zuvor bereits durch die Umfeldsensorik als unvermeidbar erkannt worden war, wenigstens eine weitere Komponente der Insassenrückhaltevorrichtung pyrotechnisch bewegt wird.

Für Situationen, in denen die Umfeldsensorik das Eintreten eines Aufpralls zu spät erkennt, kann durch die erfindungsgemäße Ausbildung des Verfahrens eine Rückfallposition geschaffen werden. Die weitere Komponente ist in einer Alternative als Endbeschlagstraffer ausgebildet, welcher pyrotechnisch gezündet wird. Somit befinden sich die elektromotorisch betätigte Gurtbewegungseinrichtung (elektromotorischer Gurtstraffer) und der pyrotechnische Straffer an verschiedenen Orten des Gurtsystems. In einer anderen Alternative ist vorgesehen, diese am gleichen Ort zu verbauen.

Wie bereits erwähnt, betrifft die Erfindung auch eine Insassenrückhaltevorrichtung zur Durchführung des erfindungsgemäßen Verfahrens. Eine solche Insassenrückhaltevorrichtung weist zumindest einen Sicherheitsgurt, eine Gurtbewegungseinrichtung und einen Gurt-Endbeschlag mit einem Gurtschloss auf.

Erfindungsgemäß ist die Insassenrückhaltevorrichtung nun derart hergerichtet, dass die Gurtbewegungseinrichtung mit wenigstens einem Elektromotor bewegungsmäßig gekoppelt ist und durch den Elektromotor in zwei entgegengesetzten Richtungen bewegbar ist.

Auf diese Weise können durch die Insassenrückhaltevorrichtung die zwei zuvor beschriebenen Verfahrensphasen realisiert werden.

Um insbesondere die in der Incrash-Phase zugelassene Vorverlagerung kontrolliert erfolgen zu lassen, ist es äußerst zweckmäßig, wenn der Elektromotor mit der Gurtbewegungseinrichtung bewegungsmäßig über ein selbsthemmendes Getriebe gekoppelt ist. Das selbsthemmende Getriebe kann beispielsweise in Form eines Schneckengetriebes ausgebildet sein.

In weiterer Ausbildung der Insassenrückhaltevorrichtung ist der Gurt-Endbeschlag durch eine pyrotechnische Einheit bewegbar. Hierdurch kann, wie bereits erwähnt, eine zusätzliche Sicherheit bereitgestellt werden.

Schließlich soll mit der Erfindung auch ein Kraftfahrzeug unter Schutz gestellt werden, welches wenigstens eine erfindungsgemäße Insassenrückhaltevorrichtung aufweist.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht immer maßstabsgetreu. In manchen Figuren können Proportionen übertrieben dargestellt sein, um Merkmale eines Ausführungsbeispiels deutlicher hervorheben zu können.

Es zeigen, jeweils schematisch
- Fig. 1: ein Kraftfahrzeug mit einer Insassenrückhaltevorrichtung, welche nach dem erfindungsgemäßen Verfahren arbeitet,
- Fig. 2: eine weiter vereinfachte Darstellung gemäß Ansicht II aus Fig. 1, in einer Precrash-Phase,
- Fig. 3: eine Darstellung vergleichbar mit Fig. 2, in einer Incrash-Phase und
- Fig. 4: die Darstellung eines zeitlichen Kräfteverlaufs der auf den Insassen wirkenden Gurtkraft.

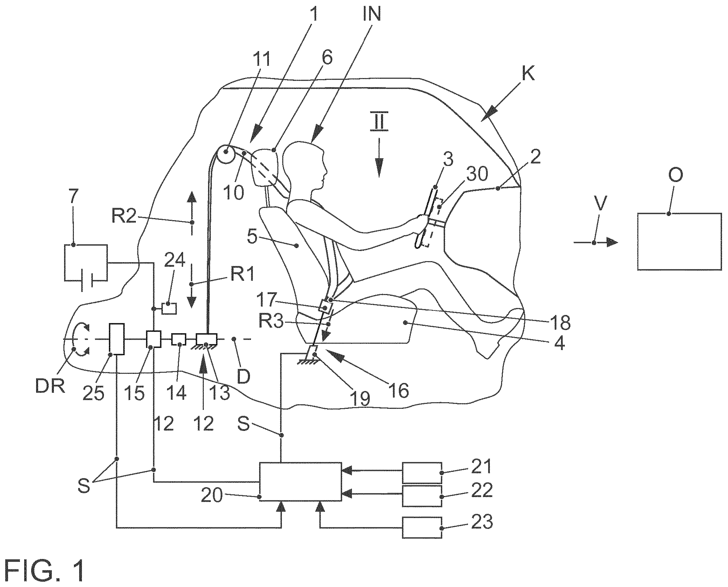

Es wird auf die Fig. 1 bis 3 Bezug genommen.

In der Fig. 1 ist die Fahrgastzelle eines Kraftfahrzeugs K im Cockpitbereich dargestellt. Ein Insasse IN hat auf einem Fahrersitz Platz genommen, welcher ein Sitzkissen 4, eine Sitzlehne 5 und eine Kopfstütze 6 aufweist.

Der Insasse IN ist durch eine Insassenrückhaltevorrichtung 1 gesichert und befindet sich in einer normalen Fahrposition vor einem Lenkrad 3 und einer Instrumententafel 2. Das Lenkrad 3 ist mit einer angedeuteten, pyrotechnischen Airbageinrichtung 30 versehen.

Die Insassenrückhaltevorrichtung 1 umfasst als Komponenten einen als Drei-Punkt-Gurt ausgebildeten Sicherheitsgurt 10. Der Sicherheitsgurt 10 ist über eine Umlenkeinrichtung 11 mit einer fahrzeugfesten Gurtbewegungseinrichtung 12 verbunden.

Im Bereich des Beckens vom Insassen IN ist der Sicherheitsgurt 10 mit einem Gurt-Endbeschlag 16 verbunden.

Die Gurtbewegungseinrichtung 12 weist eine Gurtwickelvorrichtung 13 auf, welche um eine Drehachse D in zwei Drehrichtungen DR drehbar ist.

Die Drehachse D bzw. Welle der Gurtwickelvorrichtung 13 ist mit einem Elektromotor 15 bewegungsmäßig über ein zwischengeschaltetes, selbsthemmendes Getriebe 14 verbunden. Das Getriebe 14 kann als Schneckengetriebe ausgebildet sein.

Der Elektromotor 15 kann in zwei entgegengesetzte Drehrichtungen DR angetrieben werden, so dass durch die Gurtwickelvorrichtung 13 der Sicherheitsgurt 10 in einer Richtung R1 aufgewickelt, also gestrafft oder in einer Richtung R2 abgewickelt werden kann.

Der Gurt-Endbeschlag 16 umfasst ferner ein Gurtschloss 17, in das eine Gurtzunge 18 des Sicherheitsgurtes 10 eingesteckt und somit gesichert werden kann. Der Gurt-Endbeschlag 16 kann vorzugsweise zusätzlich noch mit einem pyrotechnischen Endbeschlagstraffer 19 versehen sein, mit dessen Hilfe der Gurt-Endbeschlag 16 in eine Richtung R3 nach unten bewegt werden und somit ebenfalls den Sicherheitsgurt 10 straffen kann.

Ferner ist eine Auswerte- und Steuereinheit 20 angedeutet, welche über Signal- und Steuerleitungen S sowohl den Elektromotor 15 als auch den pyrotechnischen Endbeschlagstraffer 19 ansteuern kann.

Die Auswerte- und Steuereinheit 20 ist ferner signaltechnisch mit einer Umfeldsensorik 21, einer Beschleunigungssensorik 22 und einer Insassenerkennung 23 verbunden.

Die Umfeldsensorik 21 kann beispielsweise Kamerasysteme, Radarsysteme und/oder Ultraschallsensoren beinhalten. Die Umfeldsensorik 21 dient dazu, das Umfeld des Kraftfahrzeugs K, beispielsweise potentielle Kollisionshindernisse, zu erfassen.

Die Beschleunigungssensorik 22 umfasst Beschleunigungssensoren, welche Beschleunigungen erfassen können, die auf einen Aufprall beziehungsweise Crash des Kraftfahrzeugs K hinweisen können. Beispielsweise können durch die Beschleunigungssensorik 22 Längs-, Quer-, Roll- und Gierbeschleunigungen gemessen werden.

Das Kraftfahrzeug K bewegt sich im vorliegenden Ausführungsbeispiel mit der Fahrzeuggeschwindigkeit v auf ein fahrzeugfremdes Objekt O zu.

Wird nun durch die Auswerte- und Steuereinheit 20 auf Grund der Signale 21 der Umfeldsensorik 21 festgestellt, dass ein Aufprall auf das Objekt O als unvermeidbar erscheint, so wird durch die Auswerte- und Steuereinheit 20 ein entsprechendes Steuersignal an den Elektromotor 15 (als eine Komponente der Insassenrückhaltevorrichtung 1) ausgegeben.

Das Steuersignal ist derart gestaltet, dass dadurch der Elektromotor 15 in eine solche Drehrichtung DR dreht, dass der Sicherheitsgurt 10 in die Richtung R1 aufgewickelt und damit gestrafft wird.

Auf diese Weise werden eventuell bestehende Gurtlosen zwischen dem Insassen IN und dem Sicherheitsgurt 10 zunächst beseitigt und der Insasse IN wird zusätzlich durch den Sicherheitsgurt 10 gegen die Sitzlehne 5 in eine stabile Sitzposition gezogen.

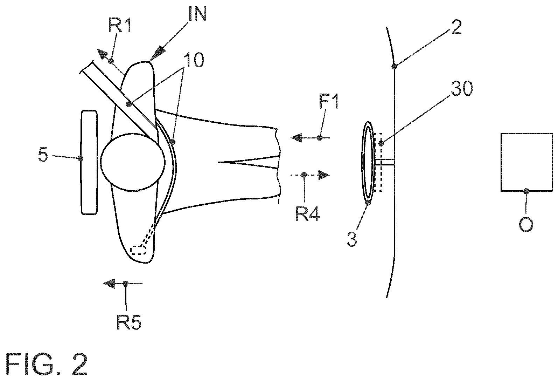

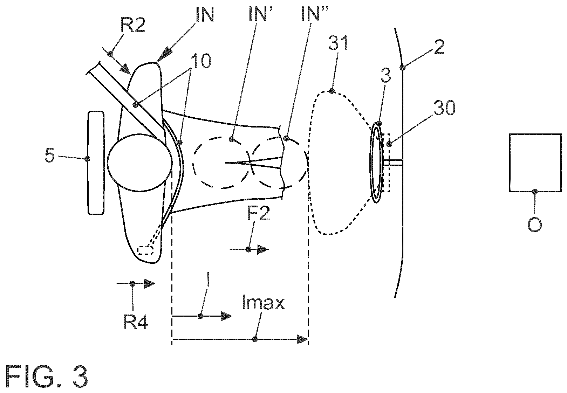

Wird anschließend von der Auswerte- und Steuereinheit 20 auf Grund der Signale der Beschleunigungssensorik 22 ein erfolgter Aufprall des Kraftfahrzeugs K auf das Objekt detektiert, so steuert die Auswerte- und Steuereinheit 20 den Elektromotor 15 in entgegengesetzter Drehrichtung DR an. Dies führt dazu, dass die Gurtwickelvorrichtung 13 den Sicherheitsgurt 10 in Richtung R2 abwickelt und somit zumindest ein Stück weit wieder frei gibt. Dies soll später noch anhand der Fig. 2 und 3 näher erläutert werden.

Die Freigabe des Sicherheitsgurtes 10, also die Abwicklung in Richtung R2 kann auf Grund des selbsthemmenden Getriebes 14 kontrolliert erfolgen.

Wirkt also bei einem Aufprall, bedingt durch die Massenträgheitskraft des Insassen IN eine Kraft auf den Sicherheitsgurt 10 in Richtung R2, so wird die Abwicklung des Sicherheitsgurtes 10 in Richtung R2 bis zu einem bestimmten Maximalwert einer Wegstrecke kontrolliert freigegeben.

In der beschriebenen Precrash-Phase, bei dem der Sicherheitsgurt 10 in Richtung R1 aufgewickelt wird, erfolgt ständig die Überwachung des von einer Spannungsquelle 7 zum Elektromotor 15 fließenden Stroms durch eine Strommesseinrichtung 24. Über die Messung des Stroms kann auf die Höhe der auf den Insassen IN durch den Sicherheitsgurt 10 wirkenden Gurtkraft geschlossen werden. Diese soll in der Precrash-Phase zu keinem Zeitpunkt einen bestimmten Gradienten und/oder einen Maximalwert übersteigen, wie später noch erläutert wird.

Hingegen erfolgt in der Incrash-Phase, also bei Abwicklung des Sicherheitsgurtes 10 in Richtung R2 eine ständige Überwachung des abgewickelten Weges durch einen mit dem Elektromotor 15 signaltechnisch verbundenen Drehwinkelsensor 25.

Es sei darauf hingewiesen, dass bei Elektrofahrzeugen als Spannungsquelle 7 vorteilhaft eine Nutzung des Hochvolt-Bordnetzes, also der Traktionsbatterie erfolgen kann, um eine höhere Leistung des Elektromotors 15 auch mit geringeren Strömen und Kabelquerschnitten zu ermöglichen.

Anhand der Fig. 2 soll nun noch einmal die Precrash-Phase näher erläutert werden.

Wie bereits beschrieben, erfolgt nach Erkennung eines unvermeidbaren Aufpralls auf das Objekt O eine Straffung des Sicherheitsgurtes 10 in Richtung R1. Dabei wird der Insasse vom Sicherheitsgurt 10 in eine Richtung R5, also in Richtung auf die Sitzlehne 5 gezogen. Dabei wirkt auf den Insassen IN eine Gurtkraft F1, welche entgegen einer zu erwartenden, aufprallbedingten Vorverlagerungsrichtung R4 gerichtet ist.

Hierbei soll der Elektromotor 15 so angesteuert werden, dass der Gradient (der Anstieg) oder das Maximum der Gurtkraft F1 zu keinem Zeitpunkt einen bestimmten Wert übersteigt.

In der in Fig. 3 gezeigten Incrash-Phase wird aufgrund der Daten der Beschleunigungssensorik 22 bereits ein Aufprall auf das Objekt O detektiert. Dies führt dazu, dass die pyrotechnische Airbageinrichtung 30 durch die Auswerte- und Steuereinheit 20 derart angesteuert wird, dass ein Airbag 31 gezündet wird und aus dem Lenkrad 3 in Richtung des Insassen IN heraustritt.

Bedingt durch die Masse des Insassen IN wirkt eine Trägheitskraft F2 auf den Insassen IN. Damit die durch den Sicherheitsgurt 10 auf den Insassen IN wirkende Reaktionskraft nicht zu groß wird, erfolgt in kontrollierter Weise eine Abwicklung des Sicherheitsgurtes 10 in Richtung R2 derart, dass eine Vorverlagerung des Insassen IN in Richtung R4 über eine Wegstrecke I möglich ist. Mit IN' und IN" sind bereits vorverlagerte Positionen des Insassen IN angedeutet.

Anhand von Daten der Beschleunigungssensorik 22, welche über die erfolgte Schwere des Aufpralls Aufschlüsse geben, und auch anhand von Daten der Insassenerkennung 23 wird unter Berücksichtigung der Position des Insassen IN, also der Position des Sitzkissens 4 und der Sitzlehne 5 sowie des Aufblasweges vom Airbag 31 eine maximal verfügbare Wegstrecke Imax (maximaler ausnutzbarer Vorverlagerungsweg) berechnet.

Der berechnete Vorverlagerungsweg Imax wird während der Incrash-Phase zweckmäßigerweise voll ausgenutzt und über diesen Weg erfolgt dementsprechend auch eine kontrollierte Abwicklung des Sicherheitsgurtes 10 in Richtung R2.

Somit ist auch in der Incrash-Phase eine maximale Schonung des Insassen bei maximaler Sicherheit gewährleistet.

Wie erwähnt, wird in der Incrash-Phase gemäß Fig. 2 bei Aufwicklung des Sicherheitsgurtes 10 in Richtung R1 ständig die Stromaufnahme des Elektromotors 15 überwacht und dadurch die auf den Insassen IN wirkende Gurtkraft F1 kontrolliert. Dies erfolgt vorteilhaft auch unter Zuhilfenahme von Daten der Umfeldsensorik 21 über die zu erwartende Aufprallschwere (Relativgeschwindigkeit zum Objekt O, Masse des Objektes O, Überdeckung zum Objekt O und dergleichen). Gleichfalls kann in der Precrash-Phase auch die Insassenerkennung 23 genutzt werden, um Daten über die Position, das Gewicht, die Größe und den Gurtanschnallstatus des Insassen an die Auswerte- und Steuereinheit 20 liefern und das Kraftniveau der Gurtkraft F1 auch in Abhängigkeit dieser Daten kontrollieren zu können.

Falls ein unvermeidbarer Aufprall auf das Objekt O ausnahmsweise durch die Umfeldsensorik 21 nicht oder verspätet erkannt wurde, dient als Rückfallposition der bereits erwähnte, pyrotechnische Endbeschlagstraffer 19. Bei erkanntem Aufprall auf das Objekt O wird der pyrotechnische Endbeschlagstraffer 19 derart angesteuert, dass trotzdem noch eine Straffung des Sicherheitsgurtes 10 in Richtung R3 (vergleiche Fig. 1) möglich wird.

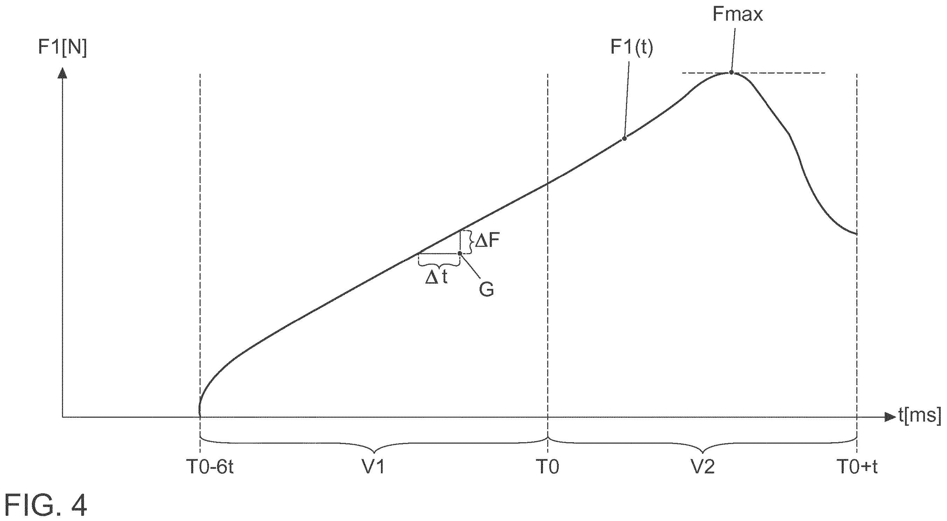

Zusammenfassend und abschließend soll das Verfahren nochmals anhand der Fig. 4 kurz dargestellt werden. Darin ist ein Kraftverlauf F1(t) der Gurtkraft F1 über die Zeit t aufgetragen. Analog verhält sich der Verlauf einer Stromaufnahme des Elektromotors 15 über die Zeit t.

Zu einem Zeitpunkt T0 erfolgt der Aufprall des Kraftfahrzeugs K mit dem Objekt O. Bereits zu einem Zeitpunkt T0-6t erfolgte durch die Umfeldsensorik 21 die Erkennung eines als unvermeidbar erscheinenden Aufpralls mit dem Objekt O. Die Phase vom Zeitpunkt T0-6t bis zum Zeitpunkt T0 soll als Verfahrensphase 1 (Precrash-Phase) bezeichnet werden. Der Zeitraum vom Zeitpunkt T0 bis zum Zeitpunkt T0+t soll als Verfahrensphase 2 (Incrash-Phase) bezeichnet werden.

Es fällt auf, dass das Verfahren derart durchgeführt wird, dass die Verfahrensphase V1 um ein Mehrfaches länger ausgebildet ist als die Verfahrensphase V2 (nur zeichnerisch nicht dargestellt). Vorzugsweise ist die Verfahrensphase V1 in etwa um ein 6-Faches länger bemessen als die Zeitdauer der Verfahrensphase V2. Abweichend vom Ausführungsbeispiel sind auch andere Verhältnisse der Zeitdauern denkbar. Beispielsweise ist auch eine in etwa gleiche Zeitdauer der Verfahrensphasen V1 und V2 durchaus möglich.

**Durch die** zeitliche Ausdehnung der Precrash-Phase V1 im Vergleich zur herkömmlichen Verfahrensweise können frühzeitig Gurtlose und eine Vorverlagerung des Insassen IN reduziert werden. Insbesondere kann mit geringerem Leistungseinsatz über eine längere Wirkdauer eine Ankopplung des Insassen IN an das Kraftfahrzeug K erreicht werden. Der Leistungseinsatz entspricht dabei der Wirkung eines über einen sehr kurzen Zeitraum wirkenden, pyrotechnischen Gurtstraffers. Allerdings kann durch den längeren Zeitraum die Gurtstraffung für den Insassen IN sehr viel schonender gestaltet werden.

Zudem ist durch den Einsatz des Elektromotors 15 und damit der reversiblen Ausprägung der Verfahrensphase V1 jederzeit eine Rücknahme der Auslöseentscheidung, also der Gurtaufwicklung (Gurtstraffung) möglich, beispielsweise wenn auf Basis der Umfeldsensorik 21 ein Ausbleiben eines Aufpralls mit dem Objekt O detektiert wird.

Während der Verfahrensphase V1 wird andauernd die Stromaufnahme des Elektromotors 15 kontrolliert und damit sichergestellt, dass der in dieser Phase ansteigende Kraftverlauf F1(t) einen bestimmten Kraftgradienten G nicht überschreitet. Der Kraftgradient G, also hier die Zunahme der Gurtkraft F1 ist durch das Verhältnis von ΔF zu Δt bestimmt. In der Verfahrensphase V1 erfolgt also ein kraftgesteuerter Einzug des Sicherheitsgurtes 10.

In der Verfahrensphase V2 hingegen erfolgt keine Überwachung der Gurtkraft F1 mehr. Hier erfolgt eine Einstellung der auf den Insassen IN wirkenden Gurtkraft F1 ausschließlich durch die kontrollierte Abwicklung des Sicherheitsgurtes 10 über eine vorbestimmte Wegstrecke hinweg. Die Verfahrensphase V2 ist also durch eine Wegsteuerung gekennzeichnet.

Hierdurch ist sichergestellt, dass auch in der Verfahrensphase V2 die Gurtkraft F1 einen bestimmten Kraftgradienten G sowie einen Grenzwert eines Kraftmaximums Fmax nicht überschreitet.

### Bezugszeichenliste

- 1: Insassenrückhaltevorrichtung
- 2: Instrumententafel
- 3: Lenkrad
- 4: Sitzkissen
- 5: Sitzlehne
- 6: Kopfstütze
- 7: Spannungsquelle
- 10: Sicherheitsgurt
- 11: Umlenkeinrichtung
- 12: Gurtbewegungseinrichtung
- 13: Gurtwickelvorrichtung
- 14: selbsthemmendes Getriebe
- 15: Elektromotor
- 16: Gurt-Endbeschlag
- 17: Gurtschloss
- 18: Gurtzunge
- 19: pyrotechnischer Endbeschlagstraffer
- 20: Auswerte- und Steuereinheit
- 21: Umfeldsensorik
- 22: Beschleunigungssensorik
- 23: Insassenerkennung
- 24: Strommesseinrichtung
- 25: Drehwinkelsensor
- 30: pyrotechnische Airbageinrichtung
- 31: Airbag

- D: Drehachse
- DR: Drehrichtung
- F1: Gurtkraft
- F2: Trägheitskraft
- F1(t): Kraftverlauf der Gurtkraft
- Fmax: Kraftmaximum
- G: Kraftgradient
- IN, IN', IN": Insasse
- K: Kraftfahrzeug
- I: Wegstrecke einer Vorverlagerung
- Imax: maximaler verfügbarer Vorverlagerungsweg
- O: fahrzeugfremdes Objekt
- R1-R5: Richtungen
- S: Signal- und Steuerleitungen
- t: Zeit
- T0: Zeitpunkt des Aufpralls
- v: Fahrzeuggeschwindigkeit
- V1: Verfahrensphase 1 (Precrash-Phase)
- V2: Verfahrensphase 2 (Incrash-Phase)
- ΔF: delta F
- Δt: delta t

## Patentansprüche

1. Verfahren zur Ansteuerung wenigstens einer Komponente einer Insassenrückhaltevorrichtung (1) für ein Kraftfahrzeug (K), bei dem zumindest bei einem als unvermeidbar erscheinenden Aufprall auf ein fahrzeugfremdes Objekt (O) die wenigstens eine Komponente in einer Verfahrensphase (V1) derart angesteuert wird, dass durch die Insassenrückhaltevorrichtung (1) eine Kraft (F1) auf den Insassen (IN) wirkt, welche entgegen einer zu erwartenden, aufprallbedingten Vorverlagerungsrichtung (R4) des Insassen (IN) gerichtet ist, wobei in der einen Verfahrensphase (V1) die wenigstens eine Komponente derart angesteuert wird, dass ein bestimmter Gradient (G) und/oder ein bestimmtes Maximum (Fmax) der auf den Insassen (IN) wirkenden Kraft (F1) nicht überschritten wird und in einer anderen, nachfolgenden Verfahrensphase (V2) die wenigstens eine Komponente derart angesteuert wird, dass eine Vorverlagerung des Insassen (IN) über eine bestimmte oder bestimmbare Wegstrecke (I, Imax) zugelassen wird, wobei die wenigstens eine Komponente ein Elektromotor (15) einer Gurtbewegungseinrichtung (12) ist, der in der einen Verfahrensphase (V1) derart angesteuert wird, dass ein Sicherheitsgurt (10) des Insassen (IN) gestrafft und dabei ein bestimmter Gradient (G) und/oder ein bestimmtes Maximum (Fmax) einer Stromaufnahme des Elektromotors (15) nicht überschritten wird und in der anderen Verfahrensphase (V2) der Elektromotor (15) in einer entgegengesetzten Drehrichtung (DR) angesteuert wird, derart, dass eine Vorverlagerung des Insassen (IN) ermöglicht wird, wobei eine Drehung des Elektromotors (15) nur bis zu einem bestimmten Grenzwert einer Wegstrecke (I) der Vorverlagerung des Insassen (IN) zugelassen wird,
**dadurch gekennzeichnet, dass**
das Verfahren in der einen Verfahrensphase (V1) auf Basis von Daten einer Umfeldsensorik (21) arbeitet und in der anderen Verfahrensphase (V2) auf Basis von Daten einer Beschleunigungssensorik (22),
wobei bei einem Erkennen eines erfolgten Aufpralls durch die Daten der Beschleunigungssensorik (22), welcher nicht zuvor bereits durch die Umfeldsensorik (21) als unvermeidbar erkannt worden war, wenigstens eine weitere Komponente der Insassenrückhaltevorrichtung (1) pyrotechnisch bewegt wird,
wobei die wenigstens eine weitere Komponente als pyrotechnischer Straffer ausgebildet ist, welcher pyrotechnisch gezündet wird, wobei der pyrotechnische Straffer als Endbeschlagstraffer (19) ausgebildet ist oder am gleichen Ort wie die elektromotorisch betätigte Gurtbewegungseinrichtung (12) verbaut ist.

2. Verfahren nach Anspruch 1, **dadurch gekennzeichnet, dass** als Grenzwert der Wegstrecke (I) der Vorverlagerung ein für den Aufprall im Innenraum maximal verfügbarer Vorverlagerungsweg (Imax) festgelegt wird.

3. Verfahren nach einem der vorhergehenden Ansprüche 1 oder 2, **dadurch gekennzeichnet, dass** der bestimmte Gradient (G) und/oder das Maximum (Fmax) der Stromaufnahme und/oder der Grenzwert der Wegstrecke (I) der Vorverlagerung des Insassen (IN) auch in Abhängigkeit von einer zu erwartenden Schwere des Aufpralls festgelegt werden.

4. Verfahren nach einem der vorhergehenden Ansprüche 1 bis 3, **dadurch gekennzeichnet, dass** der bestimmte Gradient (G) und/oder das Maximum (Fmax) der Stromaufnahme und/oder der Grenzwert der Wegstrecke (I) der Vorverlagerung des Insassen (IN) auch in Abhängigkeit von erfassten Daten des Insassen (IN) festgelegt werden.

5. Verfahren nach einem der vorhergehenden Ansprüche, **dadurch gekennzeichnet, dass** die Vorverlagerung über ihre Wegstrecke (I) kontrolliert erfolgt.

6. Verfahren nach einem der vorhergehenden Ansprüche, **dadurch gekennzeichnet, dass** die Zeitdauer (t) der einen Verfahrensphase (V1) zumindest um ein Mehrfaches länger bemessen ist als die Zeitdauer (t) der anderen Verfahrensphase (V2).

7. Verfahren nach Anspruch 6, **dadurch gekennzeichnet, dass** die Zeitdauer (t) der einen Verfahrensphase (V1) in etwa dem 4- bis 7-fachen, vorzugsweise in etwa dem 6-fachen der Zeitdauer (t) der anderen Verfahrensphase (V2) entspricht.

8. Verfahren nach einem der vorhergehenden Ansprüche, **dadurch gekennzeichnet, dass** als elektrische Spannungsquelle (7) zur Bewegung des Elektromotors (15) eine Hochspannungsquelle genutzt wird.

9. Insassenrückhaltevorrichtung (1) zur Durchführung des Verfahrens nach einem der vorhergehenden Ansprüche, welche zumindest einen Sicherheitsgurt (10), eine Gurtbewegungseinrichtung (12) und einen Gurt-Endbeschlag (16) mit einem Gurtschloss (17), eine Umfeldsensorik (21), eine Beschleunigungssensorik (22) und eine Auswerte- und Steuereinheit (20) aufweist, wobei die Gurtbewegungseinrichtung (12) mit wenigstens einem Elektromotor (15) bewegungsmäßig gekoppelt ist und durch den Elektromotor (15) in zwei entgegengesetzten Richtungen bewegbar ist, wobei die Auswerte- und Steuereinheit (20) signaltechnisch mit der Umfeldsensorik (21) und der Beschleunigungssensorik (22) verbunden ist und
wobei die Auswerte- und Steuereinheit (20) dazu konfiguriert ist, über Signal- und Steuerleitungen (S) den Elektromotor (15) anzusteuern,
**gekennzeichnet durch**
wenigstens eine weitere Komponente, die als pyrotechnischer Straffer ausgebildet ist, welcher bei einem Erkennen eines erfolgten Aufpralls durch die Daten der Beschleunigungssensorik (22), welcher nicht zuvor bereits durch die Umfeldsensorik (21) als unvermeidbar erkannt worden war, durch die Auswerte- und Steuereinheit (20) pyrotechnisch gezündet wird, wobei der pyrotechnischer Straffer als pyrotechnischer Endbeschlagstraffer (19) ausgebildet ist, durch den der Gurt-Endbeschlag (16) bewegbar ist, oder wobei der pyrotechnische Straffer am gleichen Ort wie die elektromotorisch betätigte Gurtbewegungseinrichtung (12) verbaut ist.

10. Insassenrückhaltevorrichtung (1) nach Anspruch 9,
**dadurch gekennzeichnet, dass**
der Elektromotor (15) mit der Gurtbewegungseinrichtung (12) bewegungsmäßig über ein selbsthemmendes Getriebe (14) gekoppelt ist.

11. Kraftfahrzeug (K), **gekennzeichnet durch** wenigstens eine Insassenrückhaltevorrichtung (1) nach einem der Ansprüche 9 oder 10.

## Claims

1. Method for actuating at least one component of an occupant restraint device (1) for a motor vehicle (K), in which method, at least in the event of an apparently unavoidable collision with an object (O) not belonging to the vehicle, the at least one component is actuated in one process phase (V1) such that the occupant restraint device (1) exerts a force (F1) on the occupant (IN), which is directed against an expected, collision-induced forward displacement direction (R4) of the occupant (IN), the at least one component being actuated in one process phase (V1) such that a defined gradient (G) and/or a defined maximum (Fmax) of the force (F1) acting on the occupant (IN) is not exceeded, and in another, subsequent process phase (V2), the at least one component being actuated such that a forward displacement of the occupant (IN) over a defined or definable distance (I, Imax) is permitted, the at least one component being an electric motor (15) of a belt movement apparatus (12), which electric motor is actuated in one process phase (V1) such that a safety belt (10) of the occupant (IN) is tensioned and a defined gradient (G) and/or a defined maximum (Fmax) of current consumption of the electric motor (15) is not exceeded, and, in the other process phase (V2), the electric motor (15) is actuated in an opposite direction of rotation (DR) such that a forward displacement of the occupant (IN) is allowed, a rotation of the electric motor (15) being permitted only up to a defined limit value of a distance (I) of the forward displacement of the occupant (IN),
**characterized in that,**
in one process phase (V1), the process functions on the basis of data from an environment sensor (21) and, in the other process phase (V2), the process functions on the basis of data from an acceleration sensor (22),
at least one further component of the occupant restraint device (1) being moved pyrotechnically upon detection of a collision from the data from the acceleration sensor (22), which collision had not previously already been detected by the environment sensor (21) as unavoidable,
the at least one further component being in the form of a pyrotechnic tensioner which is pyrotechnically ignited, the pyrotechnic tensioner being in the form of an end-fitting tensioner (19) or being installed in the same location as the electromotively operated belt movement apparatus (12).

2. Method according to claim 1, **characterized in that** a maximum available forward displacement path (Imax) for the collision in the interior is determined as the limit value of the distance (I) of the forward displacement.

3. Method according to either of the preceding claims 1 or 2, **characterized in that** the defined gradient (G) and/or the maximum (Fmax) of the current consumption and/or the limit value of the distance (I) of the forward displacement of the occupant (IN) can also be determined depending on an expected severity of the collision.

4. Method according to any of the preceding claims 1 to 3,
**characterized in that** the defined gradient (G) and/or the maximum (Fmax) of the current consumption and/or the limit value of the distance (I) of the forward displacement of the occupant (IN) can also be determined depending on captured data relating to the occupant (IN).

5. Method according to any of the preceding claims, **characterized in that** the forward displacement is controlled over its distance (I).

6. Method according to any of the preceding claims, **characterized in that** the duration (t) of one process phase (V1) is at least several times longer than the duration (t) of the other process phase (V2).

7. Method according to claim 6, **characterized in that** the duration (t) of one process phase (V1) is approximately 4 to 7 times, preferably approximately 6 times, the duration (t) of the other process phase (V2).

8. Method according to any of the preceding claims, **characterized in that** a high-voltage source is used as an electrical voltage source (7) for moving the electric motor (15).

9. Occupant restraint device (1) for carrying out the method according to any of the preceding claims, comprising at least one safety belt (10), a belt movement apparatus (12) and a belt end-fitting (16) having a belt buckle (17), an environment sensor (21), an acceleration sensor (22) and an evaluation and control unit (20), the belt movement apparatus (12) being movably coupled to at least one electric motor (15) and being movable in two opposite directions by the electric motor (15),
the evaluation and control unit (20) being signal-transmittingly connected to the environment sensors (21) and the acceleration sensors (22) and
the evaluation and control unit (20) being configured to control the electric motor (15) via signal and control lines (S),
**characterized by**
at least one further component in the form of a pyrotechnic tensioner, which is pyrotechnically ignited by the evaluation and control unit (20) if a collision is detected from the data from the acceleration sensors (22), which collision had not previously already been detected by the environment sensors (21) as unavoidable, the pyrotechnic tensioner being in the form of a pyrotechnic end-fitting tensioner (19) by means of which the belt end-fitting (16) can be moved, or the pyrotechnic tensioner being installed at the same location as the electromotively operated belt movement apparatus (12).

10. Occupant restraint device (1) according to claim 9,
**characterized in that**
the electric motor (15) is movably coupled to the belt movement apparatus (12) via a self-locking gear (14).

11. Motor vehicle (K) **characterized by** at least one occupant restraint device (1) according to any of claims 9 or 10.

## Revendications

1. Procédé pour la commande d'au moins un composant d'un dispositif de retenue de passager (1) pour un véhicule automobile (K), dans lequel, au moins lors d'une collision semblant inévitable avec un objet (O) extérieur au véhicule, l'au moins un composant est commandé, dans une phase de procédé (V1), de telle sorte qu'une force (F1) est exercée sur le passager (IN) par le dispositif de retenue de passager (1), laquelle force est dirigée à l'opposé d'un sens de déplacement vers l'avant (R4) en cas de collision attendue du passager (IN), dans lequel, dans l'une phase de procédé (V1), l'au moins un composant est commandé de telle sorte qu'un gradient (G) déterminé et/ou un maximum (Fmax) déterminé de la force (F1) agissant sur le passager (IN) ne sont pas dépassés et, dans une autre phase de procédé (V2) suivante, l'au moins un composant est commandé de telle sorte qu'un déplacement vers l'avant du passager (IN) sur un parcours (I, Imax) déterminé ou déterminable est autorisé, dans lequel l'au moins un composant est un moteur électrique (15) d'un appareil de mouvement de ceinture (12) qui, dans l'une phase de procédé (V1), est commandé de telle sorte qu'une ceinture de sécurité (10) du passager (IN) est tendue, sans qu'un gradient (G) déterminé et/ou un maximum (Fmax) déterminé d'une consommation de courant du moteur électrique (15) ne soient dépassés, et dans l'autre phase de procédé (V2), le moteur électrique (15) est commandé dans un sens de rotation (DR) opposé de telle sorte qu'un déplacement vers l'avant du passager (IN) est rendu possible, dans lequel une rotation du moteur électrique (15) est autorisée uniquement jusqu'à une valeur limite déterminée d'un parcours (I) du déplacement vers l'avant du passager (IN),
**caractérisé en ce que**
le procédé fonctionne, dans l'une phase de procédé (V1), sur la base de données d'une technologie de capteurs d'environnement (21) et, dans l'autre phase de procédé (V2), sur la base de données d'une technologie de capteurs d'accélération (22),
dans lequel, lors d'une détection d'une collision effective par les données de la technologie de capteurs d'accélération (22), laquelle collision n'avait pas été préalablement détectée comme inévitable par la technologie de capteurs d'environnement (21), au moins un autre composant du dispositif de retenue de passager (1) est déplacé de manière pyrotechnique,
dans lequel l'au moins un autre composant est réalisé sous forme de tendeur pyrotechnique qui est amorcé de manière pyrotechnique, dans lequel le tendeur pyrotechnique est réalisé sous forme de tendeur à ferrure terminale (19) ou est monté au même endroit que l'appareil de mouvement de ceinture (12) à actionnement électromoteur.

2. Procédé selon la revendication 1, **caractérisé en ce qu'**une course de déplacement vers l'avant maximale disponible (Imax) pour la collision à l'intérieur de l'habitacle est définie comme valeur limite du parcours (I) du déplacement vers l'avant.

3. Procédé selon l'une des revendications précédentes 1 ou 2,
**caractérisé en ce que** le gradient (G) déterminé et/ou le maximum (Fmax) de la consommation de courant et/ou la valeur limite du parcours (I) du déplacement vers l'avant du passager (IN) sont également définis en fonction d'une gravité attendue de la collision.

4. Procédé selon l'une des revendications précédentes 1 à 3,
**caractérisé en ce que** le gradient (G) déterminé et/ou le maximum (Fmax) de la consommation de courant et/ou la valeur limite du parcours (I) du déplacement vers l'avant du passager (IN) sont également définis en fonction de données saisies du passager (IN).

5. Procédé selon l'une des revendications précédentes,
**caractérisé en ce que** le déplacement vers l'avant est effectué de manière contrôlée sur tout son parcours (I).

6. Procédé selon l'une des revendications précédentes, **caractérisé en ce que** la durée (t) de l'une phase de procédé (V1) est mesurée et est au moins plusieurs fois plus longue que la durée (t) de l'autre phase de procédé (V2).

7. Procédé selon la revendication 6, **caractérisé en ce que** la durée (t) de l'une phase de procédé (V1) correspond à environ 4 à 7 fois, de préférence à environ 6 fois, la durée (t) de l'autre phase de procédé (V2).

8. Procédé selon l'une des revendications précédentes, **caractérisé en ce qu'**une source haute tension est utilisée comme source de tension (7) électrique pour le mouvement du moteur électrique (15).

9. Dispositif de retenue de passager (1) pour la mise en œuvre du procédé selon l'une des revendications précédentes, lequel présente au moins une ceinture de sécurité (10), un appareil de mouvement de ceinture (12) et une ferrure terminale de ceinture (16) comportant une boucle de ceinture (17), une technologie de capteurs d'environnement (21), une technologie de capteurs d'accélération (22) et une unité d'évaluation et de commande (20), dans lequel l'appareil de mouvement de ceinture (12) est accouplé en mouvement à au moins un moteur électrique (15) et peut être déplacé dans deux sens opposés par le moteur électrique (15), dans lequel l'unité d'évaluation et de commande (20) est connectée par une technique de transmission de signaux à la technologie de capteurs d'environnement (21) et à la technologie de capteurs d'accélération (22), et
dans lequel l'unité d'évaluation et de commande (20) est configurée pour commander le moteur électrique (15) par l'intermédiaire de lignes de signalisation et de commande (S),
**caractérisé par**
au moins un autre composant réalisé sous forme de tendeur pyrotechnique qui, lors d'une détection d'une collision effective par les données de la technologie de capteurs d'accélération (22), laquelle collision n'avait pas été préalablement détectée comme inévitable par la technologie de capteurs d'environnement (21), est amorcé de manière pyrotechnique par l'unité d'évaluation et de commande (20), dans lequel le tendeur pyrotechnique est réalisé sous forme de tendeur à ferrure terminale (19) pyrotechnique au moyen duquel la ferrure terminale de ceinture (16) peut être déplacée, ou dans lequel le tendeur pyrotechnique est monté au même endroit que l'appareil de mouvement de ceinture (12) à actionnement électromoteur.

10. Dispositif de retenue de passager (1) selon la revendication 9, **caractérisé en ce que** le moteur électrique (15) est accouplé en mouvement à l'appareil de mouvement de ceinture (12) par l'intermédiaire d'une transmission autobloquante (14).

11. Véhicule automobile (K), **caractérisé par** au moins un dispositif de retenue de passager (1) selon l'une des revendications 9 ou 10.
